# EUROPÄISCHE PATENTSCHRIFT

(11) **EP 1 670 132 B1**
(45) Veröffentlichungstag und Bekanntmachung des Hinweises auf die Patenterteilung: **24.09.2008**
(21) Anmeldenummer: 05021462.6
(22) Anmeldetag: 30.09.2005
(51) Int. Cl.: H02P 5/52, H02P 6/04, H02P 6/14, H02P 6/16

(54) **Verfahren und Anordnung zum Steuern des Synchronlaufs bei einer Mehrzahl von elektronisch kommutierten Motoren**
Method and arrangement for controlling the synchronisation of a plurality of electronically commutated motors
Méthode et dispositif pour contrôler la synchronisation d'un pluralité de moteurs à commutation électronique

(30) Priorität: 11.12.2004 DE 102004059752; 01.06.2005 DE 102005026673
(43) Veröffentlichungstag der Anmeldung: 14.06.2006
(73) Patentinhaber: ebm-papst St. Georgen GmbH & Co. KG, 78112 St. Georgen (DE)
(72) Erfinder: Dornhof, Konstantin, 78194 Immendingen (DE)
(74) Vertreter: Raible, Tobias

(56) Entgegenhaltungen:
- EP-A- 1 178 598
- PATENT ABSTRACTS OF JAPAN Bd. 2003, Nr. 08, 6. August 2003 (2003-08-06) -& JP 2003 116294 A (FUJI ELECTRIC CO LTD), 18. April 2003 (2003-04-18)

## Beschreibung

Die Erfindung betrifft ein Verfahren und eine Anordnung zum Steuern des Synchronlaufs einer Mehrzahl von elektronisch kommutierten Motoren. Eine Mehrzahl ("Plural") bedeutet, dass mindestens zwei Motoren synchron miteinander laufen.

In manchen Fällen ist es erforderlich, dass eine Mehrzahl von elektronisch kommutierten Motoren mit derselben Drehzahl rotiert. Meistens hat in einem solchen Fall jeder Motor seine eigene Elektronik, z.B. zur Steuerung der Ströme in seiner Statorwicklungsanordnung, und es ist ein Rechner vorgesehen, der diese verschiedenen Elektroniken zentral steuert und Drehzahlabweichungen unterdrückt. Hierbei entstehen aber hohe Kosten für eine entsprechende Hardware, und wenn die Motoren nicht exakt synchron laufen, ergeben sich Interferenzgeräusche, besonders, wenn diese Motoren Getriebe antreiben. Das Dokument JP 2003116294 beschreibt eine kostengünstige Schaltung zur Synchronisierung parallelbetriebener elektronisch kommutierter Motoren, die über einen Umrichter gesteuert werden.

Es ist deshalb eine Aufgabe der Erfindung, ein Verfahren und eine Anordnung der eingangs genannten Art bereit zu stellen.

Nach der Erfindung wird diese Aufgabe gelöst durch ein Verfahren gemäß Patentanspruch 1. Sie wird ebenfalls gelöst durch eine Anordnung gemäß Patentanspruch 2. Unter Synchronlauf wird hier ein Gleichlauf verstanden, ggf. auch mit einer vorgegebenen Relation zwischen den Drehzahlen einzelner Motoren, z.B. einer Relation 1:1, 1:2, 1:3 oder anderen.

Weitere Einzelheiten und vorteilhafte Weiterbildungen der Erfindung ergeben sich aus dem im folgenden beschriebenen und in der Zeichnung dargestellten, in keiner Weise als Einschränkung der Erfindung zu verstehenden Ausführungsbeispiel, sowie aus den Unteransprüchen. Es zeigt:
- Fig. 1: ein Schaltbild zur Erläuterung eines bevorzugten Ausführungsbeispiels einer erfindungsgemäßen Anordnung,
- Fig. 2: ein Flussdiagramm zur Erläuterung eines Verfahrens nach der Erfindung,
- Fig. 3: eine schematische Darstellung zur Erläuterung der Wirkungsweise der Erfindung,
- Fig. 4: ein Schaltbild, welches die Verwendung zur Synchronisierung von vier zweisträngigen, zweipulsigen Motoren zeigt,
- Fig. 5: eine abgemagerte Version analog Fig. 4, bei der nur zwei Motoren 112, 114 verwendet werden, die mit einem zugeordneten Hall-IC 142 bzw. 144 versehen sind,
- Fig. 6: eine Schaltung analog Fig. 5, bei der die beiden Motoren keinen Rotorstellungssensor haben, sondern nach dem sogenannten Sensorless-Prinzip arbeiten,
- Fig. 7: eine Variante zu Fig. 6, ebenfalls mit zwei Motoren, die nach dem Sensorless-Prinzip arbeiten, wobei aber zur Ansteuerung der insgesamt vier Motorwicklungen vier FET-Transistoren vorgesehen sind, d.h. jede Wicklung wird von einem eigenen Transistor gesteuert, und
- Fig. 8: ein Diagramm zur Erläuterung der Wirkungsweise von Fig. 6 und Fig. 7.

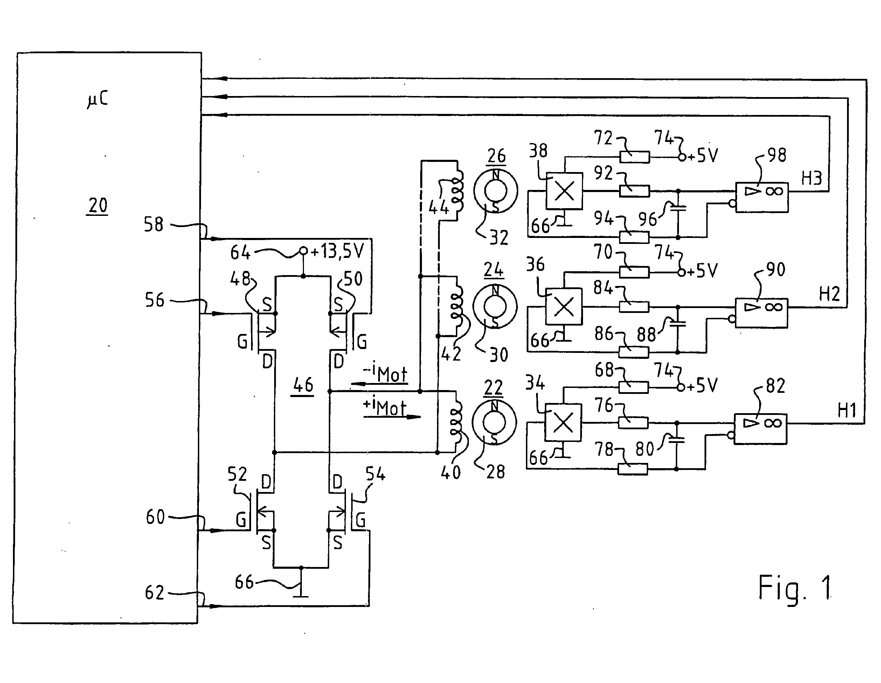

**Fig. 1** zeigt links einen µC 20, der zur Steuerung der gemeinsamen Bestromung von drei elektronisch kommutierten Motoren (ECMs) 22, 24, 26 dient. Naturgemäß eignet sich die Erfindung auch zur Steuerung einer anderen Zahl von Motoren, wobei naturgemäß der Leistungsteil je nach Zahl der Motoren verschieden ausgelegt werden muss. Jeder Motor hat einen permanentmagnetischen Rotor 28, 30 bzw. 32, dem ein Rotorstellungssensor 34, 36 bzw. 38 zugeordnet ist, der als Hallsensor dargestellt ist, da Hallsensoren bei ECMs am häufigsten verwendet werden. Jedoch können beliebige Sensoren verwendet werden, wobei diese bevorzugt von gleicher Bauweise sein sollten, um die Anordnung zu vereinfachen. Auch eine Erfassung der Drehstellung über das sogenannte Sensorless-Prinzip ist möglich.

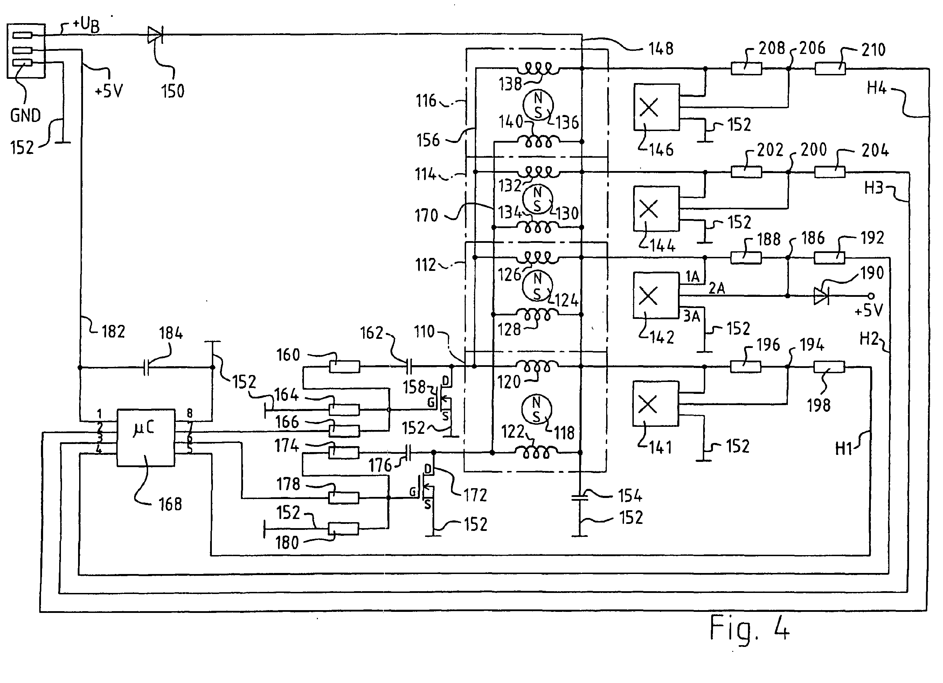

Ferner hat jeder ECM 22, 24, 26 eine Statorwicklungsanordnung 40, 42 bzw. 44, die hier als einsträngige Wicklung dargestellt ist. Diese drei Wicklungen sind bei diesem Beispiel parallel geschaltet und an den Ausgang einer H-Brücke 46 angeschlossen, welche als obere Transistoren zwei p-Kanal-MOSFETs 48, 50 und als untere Transistoren zwei n-Kanal-MOSFETs 52, 54 hat. Alternativ könnten die Wicklungen 40, 42, 44 auch in Serie geschaltet sein, und bei der Version nach Fig. 4 kann man z.B. zwei Wicklungen in Serie schalten und die beiden Serienschaltungen parallel zueinander schalten.

Die Gates G der oberen Transistoren 48, 50 sind an zwei Ausgänge 56 bzw. 58 des µC 20 angeschlossen, und die Gates G der unteren Transistoren 52, 54 an zwei Ausgängen 60 bzw. 62. Die Drains D der linken Transistoren 48, 52 sind miteinander und mit den oberen Anschlüssen der Wicklungen 40, 42, 44 verbunden. Die Source-Anschlüsse S der oberen Transistoren 48, 50 sind mit einem positiven Anschluss 64 verbunden, z.B. wie dargestellt mit + 13,5 V. Die Drains D der rechten Transistoren 50, 54 sind miteinander und mit den unteren Anschlüssen der Wicklungen 40, 42, 44 verbunden. Die Source-Anschlüsse S der unteren Transistoren 52, 54 sind mit Masse 66 verbunden.

Wenn die beiden MOSFETs 50, 52 durch den µC 20 leitend gesteuert werden, fließt ein positiver Strom +iMOT zu den drei Wicklungen 40, 42, 44, und wenn die Transistoren 50, 52 gesperrt und stattdessen die Transistoren 48 und 54 leitend sind, fließt ein Strom -iMOT. Die Motoren 22, 24, 26 sind als zweipulsige Motoren dargestellt, d.h. etwa während einer Rotordrehung von 0° el. bis 180° el. fließt ein Strom +iMOT, und während der anschließenden Drehung von etwa 180 bis 360° el. fließt ein Strom -iMOT, wie das dem Fachmann geläufig ist. Naturgemäß ist die Erfindung nicht auf diese zweipulsige Motorbauart beschränkt, sondern eignet sich prinzipiell für alle Arten von elektronisch kommutierten Motoren.

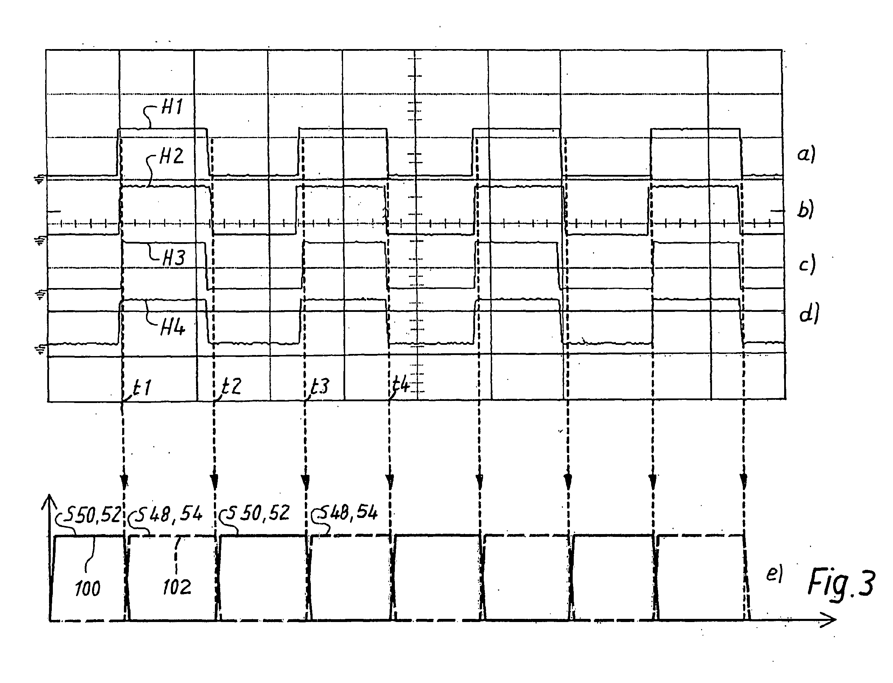

Die Hallsensoren 34, 36, 38 erhalten ihren Betriebsstrom jeweils über einen Widerstand 68, 70 bzw. 72 von einer Quelle 74 mit einer geregelten Spannung von + 5 V. Die Ausgänge des Sensors 34 sind über zwei Widerstände 76, 78 und einen Siebkondensator 80 mit den Eingängen eines OPV 82 verbunden, an dessen Ausgang man im Betrieb ein rechteckförmiges Signal H erhält, das in Fig. 3 dargestellt ist und das dem µC 20 zugeführt wird.

In der gleichen Weise ist der Sensor 36 über zwei Widerstände 84, 86 und einen Kondensator 88 mit einem Operationsverstärker 90 verbunden, an dessen Ausgang man ein Signal H2 erhält, das dem µC 20 zugeführt wird.

In der gleichen Weise ist der Sensor 38 über zwei Widerstände 92, 94 und einen Kondensator 96 mit einem OPV 98 verbunden, an dessen Ausgang man ein Signal H3 erhält, das dem µC 20 zugeführt wird.

**Fig. 3** zeigt die Signale H1 bis H3 und ihre Auswertung. Immer die letzte Signaländerung eines der drei Sensorsignale bewirkt eine Kommutierung. Z.B. ändert sich an der Stelle t1 das Signal H3 als letztes und bewirkt daher eine Kommutierung von -iMOT nach +iMoT. Auf diese Weise wird in sehr einfacher Weise ein synchroner Lauf der drei Motoren 22, 24, 26 hergestellt.

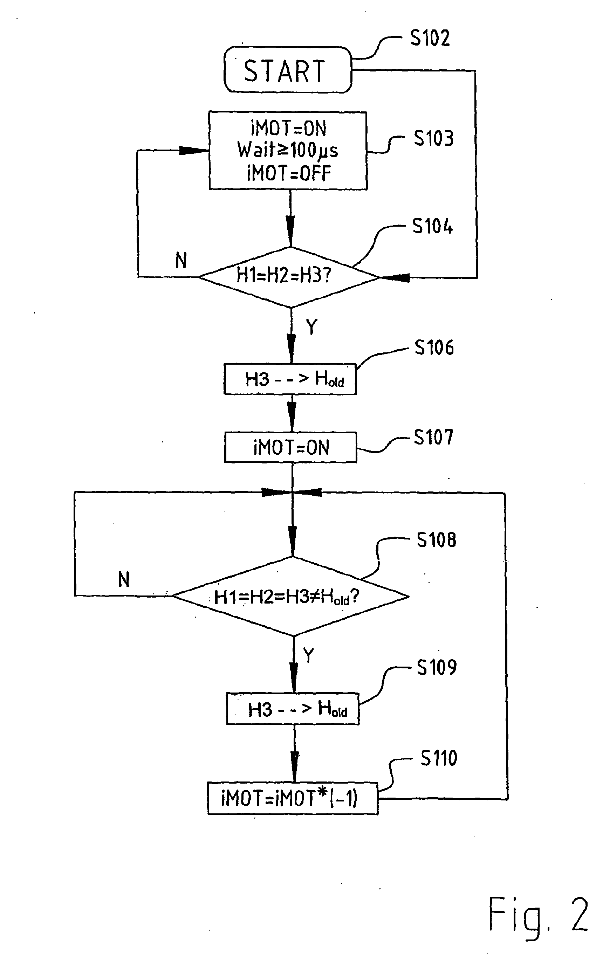

**Fig. 2** zeigt das entsprechende Flussdiagramm. Bei S102 erfolgt der Start, und der µC 20 fragt anschließend in S104 ab, ob H1 = H2 = H3 ist. Falls nicht, werden die Wicklungen 40, 42, 44 einmal gemeinsam bestromt, z.B. innerhalb einer Zeitspanne von 100 µs oder mehr, um alle Rotoren 22, 24, 26 etwa in dieselbe Ausgangsstellung zu drehen und dadurch einen übereinstimmenden Wert der Signale H1, H2 und H3 zu erreichen.

Wenn dies der Fall ist, wird in S106 der Wert für H3 als H_{old} gespeichert, und in S107 wird die Bestromung der Wicklungen 40, 42, 44 mit einem Strom der richtigen Richtung eingeschaltet, also entweder mit +iMOT oder mit -iMOT.

Anschließend wird in S108 fortlaufend geprüft, ob alle Signale H1, H2, H3 ihren Wert geändert haben, d.h. ob sie einen anderen Wert haben als den zuvor in S106 gespeicherter Wert H_{old}. Falls ja, wird in S109 der neue Wert von H3 als H_{old} gespeichert, und in S110 wird der Motorstrom iMOT entsprechend dem Wert in H_{old} kommutiert. Falls Nein, geht das Programm zurück und durchläuft erneut S108.

Nach dem Kommutieren (in S110) geht das Programm zurück zu S108, und die beschriebenen Vorgänge wiederholen sich fortlaufend.

Auf diese Weise wird ein synchroner Lauf der Motoren 22, 24, 26 mit geringem Aufwand erreicht.

**Fig. 4** zeigt ein Beispiel mit vier elektronisch kommutierten Motoren 110, 112, 114, 116. Die Motoren 22, 24, 26 gemäß Fig. 1 sind Motoren mit nur einem Wicklungsstrang 40, 42, 44, die man deshalb als einsträngige, zweipulsige Motoren bezeichnet, weil bei ihnen durch den einzigen Wicklungsstrang, z.B. den Strang 40, und bei Verwendung eines zweipoligen Rotors 28, pro Rotordrehung von 360° mech. = 360° el. zwei Stromimpulse fließen.

Die Motoren 110 bis 116 sind demgegenüber zweisträngige, zweipulsige Motoren, was gegenüber Fig. 1 die Elektronik vereinfacht und verbilligt, aber den Kupferfüllfaktor reduziert. An der Wirkungsweise des Motors ändert sich nichts, d.h. auf einen Rotor wirken die gleichen Kräfte wie bei Fig. 1.

Der Motor 110 hat einen zweipoligen permanentmagnetischen Rotor 118 und zwei Wicklungsstränge 120, 122. Der Motor 112 hat einen Rotor 124 und zwei Wicklungsstränge 126, 128. Der Motor 114 hat einen Rotor 130 und zwei Wicklungsstränge 132, 134. Der Motor 116 hat einen Rotor 136 und zwei Wicklungsstränge 138, 140. Ferner hat jeder Motor einen Hall-IC 141 bzw. 142 bzw. 144 bzw. 146. Der Hallsensor 141 wird vom Magnetfeld des Rotors 118 gesteuert, der Sensor 142 vom Rotor 124, der Sensor 144 vom Rotor 130, und der Sensor 146 vom Rotor 136.

Die rechten Anschlüsse aller acht Wicklungsstränge 120, 122, 126, 128, 132, 134, 138, 140 sind über eine Leitung 148 und eine Diode 150 mit einer Spannung UB verbunden, z.B. mit +24 V. Die Diode 150 verhindert einen Anschluss des Motors mit falscher Polarität. Zwischen der Leitung 148 und Masse 152 liegt ein Kondensator 154, der im Betrieb Blindleistung für die vier Motoren 110 bis 116 liefert.

Die linken Anschlüsse der vier oberen Stränge 120, 126, 132, 138 sind über eine Leitung 156 mit dem Drain-Anschluss D eines n-Kanal-MOSFET 158 verbunden, dessen Source S mit Masse 152 verbunden ist. Sein Gate G ist über die Serienschaltung eines Widerstands 160 und eines Kondensators 162 mit dem Drain D verbunden. Ferner ist das Gate G über einen Widerstand 164 mit Masse 152 und über einen Widerstand 166 mit einem Ausgang 7 eines Mikrocontrollers (µC) 168 verbunden. Der MOSFET 158 wird also durch den µC 168 gesteuert.

Die linken Anschlüsse der unteren Stränge 122, 128, 134 und 140 sind über eine Leitung 170 mit dem Drain D eines n-Kanal-MOSFET 172 verbunden, dessen Source S mit Masse 152 verbunden ist. Zwischen Gate und Drain liegt eine RC-Kombination 174, 176. Auch ist das Gate G über einen Widerstand 178 mit dem Ausgang 8 des µC 168 verbunden, und über einen Widerstand 180 mit Masse 152. Auch der MOSFET 172 wird also vom µC 168 gesteuert.

Der µC 168 erhält über eine Leitung 182 eine geregelte Gleichspannung von + 5 V an seinem Eingang 1, und sein Eingang 8 ist mit Masse (GND) 152 verbunden. Zwischen Masse 152 und der Leitung 182 liegt ein Siebkondensator 184.

Die Schaltungen der Hall-ICs 141, 142, 144, 146 sind weitgehend identisch. Diese sind jeweils mit einem Anschluss 3A an Masse 152 angeschlossen, und mit einem Anschluss 1A sind sie an die Leitung 148 angeschlossen, also an +UB. Der Anschluss 2A ist ein Ausgang mit offenem Kollektor, und ihm ist deshalb eine Kollektorwiderstand 188 zugeordnet.

Der Anschluss 2A ist mit einem Knotenpunkt 186 verbunden, der über einen Widerstand 188 mit dem Anschluss 1A des Hallsensors 142 sowie der Leitung 148 verbunden ist. Ferner ist der Knotenpunkt 186 über eine Diode 190 mit einer geregelten Spannung von z.B. +5 V verbunden, und über einen Widerstand 192 mit einem Eingang 3 des µC 168.

Die Diode 190 ist in diesem Fall vorgesehen, um die Spannung am Punkt 186 zu begrenzen, weil der Eingang 4 des µC 168 der sogenannte Masterpin ist, bei dem eine interne Schutzdiode fehlt, während die Prozessoreingänge 2, 3 und 6 interne Schutzdioden haben. (Der Eingang 4 dient auch zur Programmierung des Prozessors 168.)

Ebenso hat der Hallsensor 141 einen Knotenpunkt 194, der über einen Widerstand 196 mit der Leitung 148 und über einen Widerstand 198 mit dem Eingang 5 des µC 168 verbunden ist.

Ebenso hat der Hallsensor 144 einen Knotenpunkt 200, der über einen Widerstand 202 mit der Leitung 148 und über einen Widerstand 204 mit dem Eingang 3 des µC 168 verbunden ist.

Ebenso hat der Hallsensor 146 einen Knotenpunkt 206, der über einen Widerstand 208 mit der Leitung 148 und über einen Widerstand 210 mit dem Eingang 2 des µC 168 verbunden ist.

Im Betrieb werden dem µC 168 vier Hallsignale H1 bis H4 zugeführt, und diese werden mit einem Algorithmus verarbeitet, der dem Flussdiagramm der Fig. 2 entspricht. Wenn z.B. H1 = H2 = H3 = H4 = 1 ist, wird der MOSFET 158 eingeschaltet und der MOSFET 172 wird ausgeschaltet, so dass ein Strom durch die vier Wicklungsstränge 120, 126, 132 und 138 fließt.

Ist H1 = H2 = H3 = H4 = 0, so wird der MOSFET 158 ausgeschaltet, und der MOSFET 172 wird eingeschaltet, so dass ein Strom durch die vier Stränge 122, 128, 134 und 140 fließt.

Auf diese Weise fließt jeweils während einer halben Umdrehung der Rotoren 118, 124, 130, 136 ein Strom durch die vier Stränge 120, 126, 132 und 138, und während der anderen halben Umdrehung fließt ein Strom durch die vier anderen Stränge 122, 128, 134 und 140, wodurch die vier Motoren 110, 112, 114 und 116 synchron laufen. Alternativ könnte man, wie bereits erwähnt, die Stränge ggf. auch in Serie schalten, oder seriell und parallel kombiniert.

Es wäre auch möglich, z.B. den Rotor 118 vierpolig zu machen und die drei anderen Rotoren 124, 130 und 136 zweipolig. In diesem Fall läuft der Rotor 118 nur mit der halben Drehzahl der drei anderen Rotoren. In gleicher Weise würde ein sechspoliger Rotor mit einem Drittel der Drehzahl laufen.

Im µC 168 kann zusätzlich eine Drehzahlregelung vorgesehen werden, ebenso eine sogenannte Zündwinkelverschiebung, eine Blockiersicherung, welche die Motoren abschaltet, wenn einer von ihnen blockiert wird, eine Strombegrenzung, etc., wie das dem Fachmann für elektronisch kommutierte Motoren bekannt ist.

| **Bevorzugte Werte der Bauelemente in** **Fig. 4** | |
|---|---|
| µC 168 | ...PIC12F675 |
| MOSFETs 158, 172 | ...BUK98180 |
| Diode 150 | ...BAV20WS |
| Diode 190 | ...1 N4148 |
| C162, 176 | ...470 pF |
| C184 | ...100 nF |
| C154 | ...1 µF |
| R 166, 178, 188, 196, 202, 208 | ...10 kΩ |
| R 160, 164, 174, 180 | ...51 kΩ |
| R 192, 198, 204, 210 | ...100 kΩ |

Naturgemäß sind vielfache Abwandlungen möglich. Z.B. kann man die Rotorstellungen statt mittels der Hall-ICs 141 bis 146 auch mittels des sogenannten Sensorless-Prinzips erfassen, wie das nachfolgend an Beispielen erläutert wird. Statt der MOSFETs 158, 172 wären auch bipolare Transistoren möglich, doch müssten dann entsprechende Treibertransistoren vorgesehen werden.

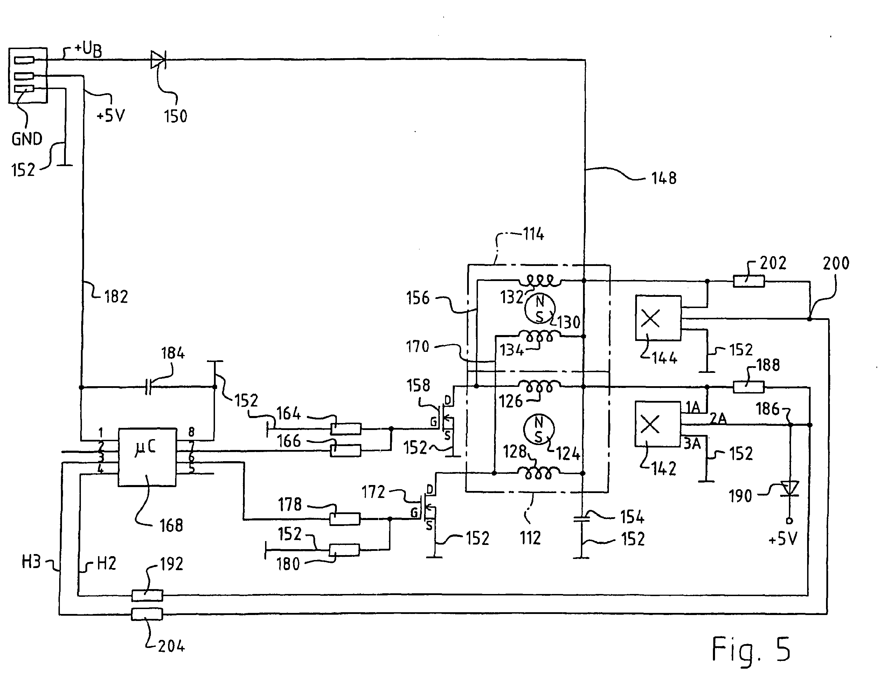

**Fig. 5** zeigt eine Variante, welche sozusagen eine abgemagerte Version von Fig. 4 darstellt. Gleiche oder gleich wirkende Teile wie in Fig. 4 werden deshalb mit denselben Bezugszeichen bezeichnet wie dort und nicht nochmals beschrieben.

Fig. 4 verwendet vier Motoren 110, 112, 114, 116, die synchron laufen. Bei Fig. 5 werden nur zwei Motoren 112, 114 verwendet, die ebenfalls synchron laufen. Die Schaltung stimmt im Übrigen mit Fig. 4 überein, weshalb sie nicht nochmals beschrieben wird. Bei den Transistoren 158, 172 sind die RC-Glieder (160, 162 bzw. 174, 176) der Fig. 4 nicht dargestellt, können aber ebenfalls verwendet werden. Da hier die zu schaltenden Induktivitäten kleiner sind, können diese RC-Glieder in vielen Fällen entfallen.

Die Wirkungsweise entspricht derjenigen, wie sie anhand von Fig. 2 und 3 beschrieben wurde, wobei jedoch nur zwei Hallsignale H2 und H3 vorhanden sind. Die Werte der Bauteile stimmen mit denjenigen überein, die bei Fig. 4 angegeben sind. Diese werden deshalb nicht wiederholt.

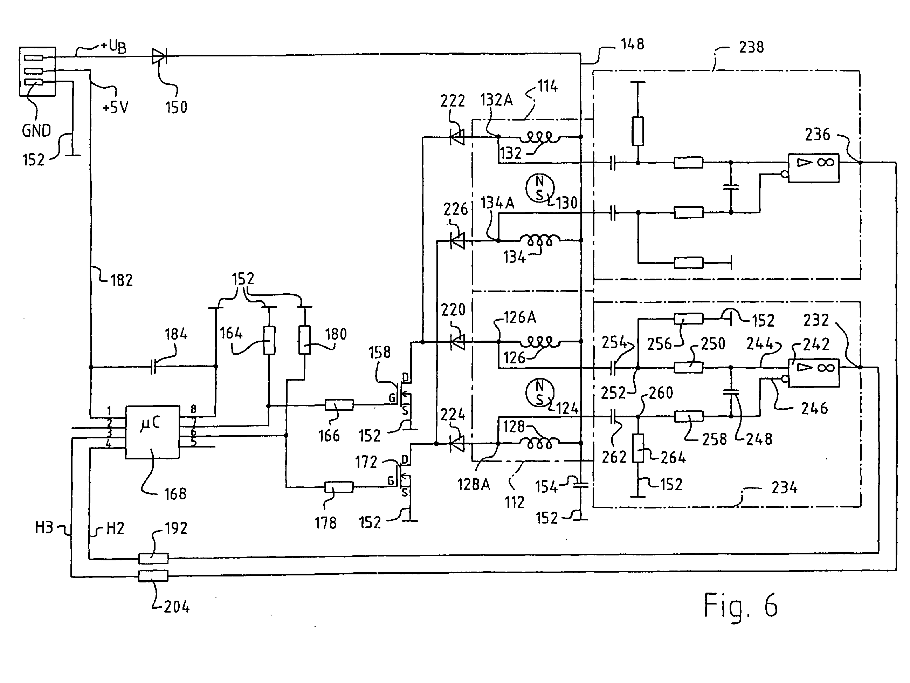

**Fig. 6** zeigt eine Schaltung analog Fig. 5, bei der die Motoren 112, 114 gleich aufgebaut sind wie in Fig. 5, ebenso die beiden FETs 158 und 172 sowie deren Ansteuerung, weshalb für diese Teile dieselben Bezugszeichen verwendet werden wie in Fig. 5, und diese übereinstimmenden Teile sowie deren Funktion werden im Interesse der Kürze nicht nochmals beschrieben.

Da bei Fig 6 die Stellung der Rotoren 124, 130 ohne einen separaten Sensor erfasst wird, wäre eine Schaltung der Wicklungen wie in Fig. 5 nicht möglich (in Fig. 5 sind die Wicklungen 126 und 132 parallel geschaltet, ebenso die Wicklungen 128 und 134). Deshalb ist in Fig. 6 der Anschluss 126A der Wicklung 126 des Motors 112 mit der Anode einer Diode 220 verbunden, deren Katode mit dem Drain des FET 158 verbunden ist. In der gleichen Weise ist der Anschluss 132A der Wicklung 132 des Motors 114 über eine Diode 222 mit dem Drain des FET 158 verbunden. Ebenso ist der Anschluss 128A der Wicklung 128 des Motors 112 über eine Diode 224 mit dem Drain des FET 172 verbunden, und der Anschluss 134A der Wicklung 134 des Motors 114 ist über eine Diode 226 mit dem Drain des FET 172 verbunden.

Auf diese Weise sind die Wicklungen, die bei Fig. 5 parallel geschaltet waren, durch die Dioden 220 bis 226 elektrisch voneinander entkoppelt, so dass die Spannungen, welche im Betrieb an diesen Wicklungen auftreten, separat erfasst und für die Steuerung des betreffenden Motors verwendet werden können. Dagegen unterscheiden sich von der Seite der FETs 158, 172 her gesehen die Schaltungen nach Fig. 5 und 6 nicht, d.h. wenn der FET 158 leitend wird, erhalten beide Wicklungen 126 und 132 gleichzeitig Strom, und wenn der FET 172 leitend wird, erhalten beide Wicklungen 128 und 134 gleichzeitig Strom.

Die FETs 158 und 172 werden - über den µC 168 - gesteuert durch eine Verknüpfung der Signale H2 und H3, welche über die Widerstände 192 bzw. 204 den Eingängen 4 bzw. 3 des µC 168 zugeführt werden.

Die Signale H2 werden geliefert vom Ausgang 232 einer Sensorless-Box 234, deren beide Eingänge mit den Anschlüssen 126A, 128A des Motors 112 verbunden sind. Ebenso werden die Signale H3 geliefert vom Ausgang 236 einer Sensorless-Box 238, deren beide Eingänge mit den Anschlüssen 132A, 134A des Motors 114 verbunden sind.

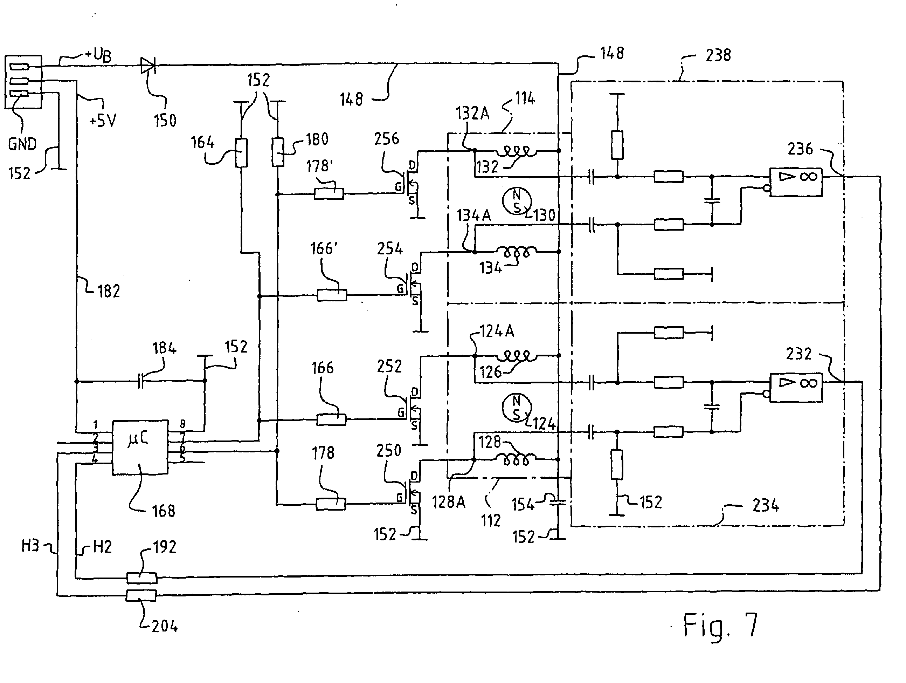

Die Sensorless-Boxen 234, 238 sind identisch, weshalb nur die Box 234 beschrieben wird. Sie sind auch identisch mit den bei Fig. 7 verwendeten Sensorless-Boxen 234, 238.

Der Anschluss 232 wird gebildet vom Ausgang eines Komparators 242, dessen nicht invertierender Eingang mit 244 und dessen invertierender Eingang mit 246 bezeichnet ist. Zwischen diesen Eingängen liegt ein Siebkondensator 248. Ferner ist der Eingang 244 über einen Widerstand 250, einen Knotenpunkt 252 und einen Kondensator 254 mit dem Anschluss 126A verbunden, und der Knotenpunkt 252 ist über einen Widerstand 256 mit Masse 152 verbunden.

Der invertierende Eingang 246 ist über einen Widerstand 258, einen Knotenpunkt 260 und einen Kondensator 262 mit dem Anschluss 128A verbunden, und der Knotenpunkt 260 ist über einen Widerstand 264 mit Masse 152 verbunden.

| **Bevorzugte Werte der Bauelemente** | |
|---|---|
| Komparator 242 | ... TS3702 |
| C 248 | ... 1 nF |
| C 254, 262 | ... 22 nF |
| R 250, 256, 258, 264 | ... 100 kΩ |

### Wirkungsweise der Sensorless Box 234

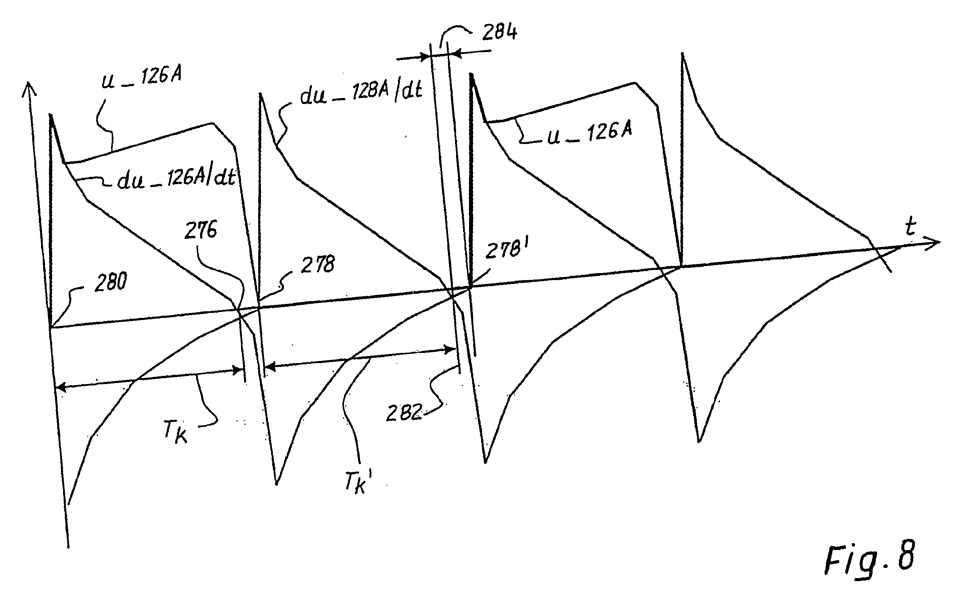

Hierzu wird auf **Fig. 8** Bezug genommen, welche verschiedene elektrische Signale zeigt. u_126A ist die induzierte Spannung in der Phase 126, wenn diese stromlos ist, und u_128A (nicht dargestellt) ist analog die Spannung an der stromlosen Phase 128.

Das Potenzial u_126A am Anschluss 126A der Phase 126 wird dem Differenzierglied zugeführt, das von dem Kondensator 254 und dem Widerstand 256 gebildet wird. Am Verbindungspunkt 252 dieser beiden Bauteile erhält man eine differenzierte Spannung du_126A/dt, und sie kann durch geeignete Wahl der Bauelemente so eingestellt werden, dass ihr Nulldurchgang 276 zeitlich vor dem Nulldurchgang 278 der Spannung u_126A liegt, vgl. Fig. 8.

Der Nulldurchgang 276 kann im µC 168 ausgewertet und als Rotorstellungssignal verwendet werden.

Gleichzeitig wird auch die Zeit Tk ab dem vorhergehenden Nulldurchgang 280 der induzierten Spannung u_126A gemessen und kann ggf. als Zeit Tk' die nachfolgende Kommutierung steuern.

In gleicher Weise wird das Potenzial u_128A am Anschluss 128A der Phase 128 durch die beiden Bauteile 262, 264 differenziert, wodurch man die Spannung du_128A/dt erhält, also das Differenzial der induzierten Spannung am Anschluss 128A, und dieses wird dem Eingang 246 des Komparators 242 zugeführt, während die Spannung du_126A/dt dem Eingang 244 zugeführt wird.

Wenn diese beiden Spannungen gleich groß werden, ändert der Komparator 242 sein Ausgangssignal. Dies ist in Fig. 8 z.B. an der Stelle 282 der Fall, und diese Stelle liegt folglich um eine Zeitspanne 284 vor dem Nulldurchgang 278' des Potenzials u_126A und kann zur Steuerung der Kommutierung dienen.

Die beiden Widerstände 250, 258 sowie der Kondensator 248 wirken als zwei Filter für die beiden Eingänge 244, 246 des Komparators 242 und verhindern, dass hochfrequente Störungen eine Falschmessung bewirken.

Das Grundprinzip bei dieser Art der Erzeugung von Rotorstellungssignalen besteht also darin, dass das Differenzial einer in einem stromlosen Strang induzierten Spannung als Kommutierungskriterium verwendet wird, und dass man dieses Kommutierungskriterium als Rotorstellungssignal auswertet.

Die Sensorless-Box 234 erzeugt also ein Signal H2, das man auch als synthetisches HallSignal bezeichnen könnte, d.h. im Betrieb wirkt es wie ein solches. Das Signal H2 wird auch auf die gleiche Weise ausgewertet wie ein Hallsignal und so, wie das in Fig. 2 und 3 beschrieben wurde. Dasselbe gilt für das Signal H3 am Ausgang 236.

**Fig. 7** unterscheidet sich von Fig. 6 dadurch, dass die Dioden 220 bis 226 der Fig. 6 entfallen und statt ihrer vier FETs vorgesehen sind. Ein FET 250 steuert den Strom in der Wicklung 128. Dieser FET wird über den Widerstand 178 gesteuert vom Ausgang 6 des µC 168. Ein FET 252, der den Strom in der Wicklung 126 steuert, wird über den Widerstand 166 gesteuert vom Ausgang 7 des µC 168.

Ein FET 254 wird über einen Widerstand 166' gesteuert vom Ausgang 7 des µC 168, d.h. die beiden FETs 252 und 254 werden synchron aus- und eingeschaltet. - Ein FET 256, der den Strom in der Wicklung 132 steuert, wird über einen Widerstand 178' angesteuert vom Ausgang 6 des µC 168, d.h. die beiden FETs 250 und 256 werden synchron ein- und ausgeschaltet.

Auf diese Weise werden die einzelnen Wicklungen der beiden Motoren 112, 114 ebenfalls sicher voneinander entkoppelt, so dass die Sensorless-Boxen 234 und 238 sicher arbeiten können. - Für die Wirkungsweise wird auf die Beschreibung zu Fig. 5 und Fig. 6 verwiesen.

Naturgemäß sind im Rahmen der vorliegenden Erfindung vielfache weitere Abwandlungen und Modifikationen möglich.

## Patentansprüche

1. Verfahren zum Steuern des Synchronlaufs einer Mehrzahl von elektronisch kommutierten Motoren (22, 24, 26; 110, 112, 114, 116), welche jeweils einen Stator mit mindestens einer Statorwicklung (40, 42, 44; 120, 122; 126, 128; 132, 134; 138, 140), einen permanentmagnetischen Rotor (28, 30, 32; 118, 124, 130, 136), und mindestens eine dem jeweiligen Motor zugeordnete Anordnung zur Erfassung von dessen Rotorstellung und zum Erzeugen eines Rotorstellungssignals (H1, H2, H3, H4) aufweisen,
und mit einer Bestromungsanordnung (46; 158, 172), an welche die Statorwicklungen der Motoren angeschlossen sind,
mit folgenden Schritten:
Die Rotorstellungssignale (H1, H2, H3, H4) werden bei den laufenden Motoren fortlaufend analysiert;
bei der Analyse wird ermittel, welches Rotorstellungssignal (H1, H2, H3, H4) sich als letztes ändert;
wenn die Analyse ergeben hat, dass alle Rotoren eine vorgegebene Rotorstellung durchlaufen haben, wird der Strom in allen Statorwicklungen (40, 42, 44; 120, 122, 126, 128, 132, 134, 138, 140) gleichzeitig kommutiert.

2. Anordnung mit einer Mehrzahl von elektronisch kommutierten Motoren (22, 24, 26; 110, 112, 114, 116), welche jeweils einen Stator mit einer Statorwicklung (40, 42, 44; 120, 122, 126, 128, 132, 134, 138, 140), einen permanentmagnetischen Rotor (28, 30, 32; 118, 124, 130, 136) und mindestens eine dem jeweiligen Motor zugeordnete Anordnung zur Erfassung von dessen Rotorstellung und zum Erzeugen eines entsprechenden Rotorstellungssignals (H1, H2, H3, H4) aufweisen,
und mit einer Bestromungsanordnung (46; 158, 172), an welche die Statorwicklungen der Motoren angeschlossen sind, wobei die Bestromungsanordnung (46; 158, 172) zur Durchführung folgender Schritte ausgebildet ist:
Die Rotorstellungssignale (H1, H2, H3, H4) der Motoren werden bei den laufenden Motoren fortlaufend analysiert;
bei der Analyse wird ermittelt, welches Rotorstellungssignal (H1, H2, H3, H4) sich als letztes ändert;
wenn die Analyse ergeben hat, dass die Rotoren (28, 30, 32; 118, 124, 130, 136) aller Motoren eine vorgegebene Rotorstellung durchlaufen haben, wird der Strom in allen Statorwicklungen kommutiert.

3. Anordnung nach Anspruch 2, bei welcher als Rotorstellungssignale Signale verwendet werden, welche nach dem Sensorless-Prinzip den einzelnen Motorwicklungen (126, 128, 132, 134) entnommen werden.

4. Anordnung nach Anspruch 3, bei welcher die einzelnen Wicklungen (126, 128, 132, 134) der Motoren (112, 114) voneinander mindestens teilweise entkoppelt sind.

5. Anordnung nach Anspruch 4, bei welcher in der Zuleitung zu einzelnen Wicklungen (126, 128, 132, 134) der Motoren (112, 114) jeweils eine Diode (220, 222, 224, 226) vorgesehen ist.

6. Anordnung nach Anspruch 4, bei welcher die einzelnen Wicklungen (126, 128, 132, 134) der Motoren (112, 114) **dadurch** entkoppelt sind, dass jeder Wicklung der Strom über einen separaten Halbleiterschalter (250, 252, 254, 256) zugeführt wird.

7. Anordnung nach einem der Ansprüche 2 bis 6, mit mindestens einem elektronisch kommutierten Motor (112, 114), welcher einen Stator mit zwei Phasen (126, 128) und einen permanentmagnetischen Rotor (124) aufweist, welch letzterer bei seiner Drehung in diesen Phasen (126, 128) des Stators Spannungen induziert, wobei die induzierte Spannung in einer stromlosen Phase des Motors differenziert und mit der differenzierten Spannung ein Rotorstellungssignal erzeugt wird.

8. Anordnung nach Anspruch 7, bei welcher das durch die Differenzierung erzeugte Signal vor seiner Auswertung gefiltert wird.

## Claims

1. Method of controlling the synchronous running of multiple electronically commutated motors (22, 24, 26; 110, 112, 114, 116), each of which has a stator with at least one stator winding (40, 42, 44; 120, 122; 126, 128; 132, 134; 138, 140), a permanently magnetic rotor (28, 30, 32; 118, 124, 130, 136), and at least one arrangement, which is associated with the appropriate motor, to capture its rotor position and generate a rotor position signal (H1, H2, H3, H4),
and with a current feed arrangement (46; 158, 172), to which the stator windings of the motors are connected,
with the following steps:
the rotor position signals (H1, H2, H3, H4) are continuously analysed while the motors are running;
in the analysis, which rotor position signal (H1, H2, H3, H4) changes last is determined;
if the result of the analysis is that all rotors have passed through a specified rotor position, the current in all stator windings (40, 42, 44; 120, 122, 126, 128, 132, 134, 138, 140) is commutated simultaneously.

2. Arrangement with multiple electronically commutated motors (22, 24, 26; 110, 112, 114, 116), each of which has a stator with a stator winding (40, 42, 44; 120, 122, 126, 128, 132, 134, 138, 140), a permanently magnetic rotor (28, 30, 32; 118, 124, 130, 136), and at least one arrangement, which is associated with the appropriate motor, to capture its rotor position and generate a corresponding rotor position signal (H1, H2, H3, H4),
and with a current feed arrangement (46; 158, 172), to which the stator windings of the motors are connected, the current feed arrangement (46; 158, 172) being in a form to execute the following steps:
the rotor position signals (H1, H2, H3, H4) of the motors are continuously analysed while the motors are running;
in the analysis, which rotor position signal (H1, H2, H3, H4) changes last is determined;
if the result of the analysis is that the rotors (28, 30, 32; 118, 124, 130, 136) of all motors have passed through a specified rotor position, the current in all stator windings is commutated.

3. Arrangement according to Claim 2, wherein signals which are taken from the individual motor windings (126, 128, 132, 134) on the sensorless principle are used as rotor position signals.

4. Arrangement according to Claim 3, wherein the individual windings (126, 128, 132, 134) of the motors (112, 114) are at least partly decoupled from each other.

5. Arrangement according to Claim 4, wherein in each of the feed lines to individual windings (126, 128, 132, 134) of the motors (112, 114), a diode (220, 222, 224, 226) is provided.

6. Arrangement according to Claim 4, wherein the individual windings (126, 128, 132, 134) of the motors (112, 114) are decoupled by the current being fed to each winding via a separate semiconductor switch (250, 252, 254, 256).

7. Arrangement according to one of Claims 2 to 6, with at least one electronically commutated motor (112, 114), which has a stator with two phases (126, 128) and a permanently magnetic rotor (124), which as it rotates, generates voltages in these phases (126, 128) of the stator, the induced voltage being differentiated in a currentless phase of the motor, and a rotor position signal being generated with the differentiated voltage.

8. Arrangement according to Claim 7, wherein the signal which is generated by the differentiation is filtered before it is analysed.

## Revendications

1. Procédé pour commander le fonctionnement synchrone d'une pluralité de moteurs à commutation électronique (22, 24, 26 ; 110, 112, 114, 116) qui présentent chacun un stator avec au moins un enroulement statorique (40, 42, 44 ; 120, 122 ; 126, 128 ; 132, 134 ; 138, 140), un rotor à aimant permanent (28, 30, 32 ; 118, 124, 130, 136) et au moins un dispositif associé au moteur respectif pour saisir la position de son rotor et générer un signal de position de rotor (H1, H2, H3, H4),
et avec un dispositif d'application de courant (46 ; 158, 172) auquel les enroulements statoriques des moteurs sont connectés,
comportant les étapes suivantes :
les signaux de position de rotor (H1, H2, H3, H4) sont analysés en continu pendant le fonctionnement des moteurs ;
lors de l'analyse, il est déterminé quel signal de position de rotor (H1, H2, H3, H4) a changé en dernier ;
s'il résulte de l'analyse que tous les rotors ont passé par une position de rotor prédéfinie, le courant est commuté en même temps dans tous les enroulements statoriques (40, 42, 44 ; 120, 122, 126, 128, 132, 134, 138, 140).

2. Dispositif comportant une pluralité de moteurs à commutation électronique (22, 24, 26 ; 110, 112, 114, 116) qui présentent chacun un stator avec un enroulement statorique (40, 42, 44 ; 120, 122, 126, 128, 132, 134, 138, 140), un rotor à aimant permanent (28, 30, 32 ; 118, 124, 130, 136) et au moins un dispositif associé au moteur respectif pour saisir la position de son rotor et générer un signal de position de rotor (H1, H2, H3, H4) correspondant,
et avec un dispositif d'application de courant (46 ; 158, 172) auquel les enroulements statoriques des moteurs sont connectés, le dispositif d'application de courant (46 ; 158, 172) étant conçu pour exécuter les étapes suivantes :
les signaux de position de rotor (H1, H2, H3, H4) des moteurs sont analysés en continu pendant le fonctionnement des moteurs ;
lors de l'analyse, il est déterminé quel signal de position de rotor (H1, H2, H3, H4) a changé en dernier ;
s'il résulte de l'analyse que les rotors (28, 30, 32 ; 118, 124, 130, 136) de tous les moteurs ont passé par une position de rotor prédéfinie, le courant est commuté dans tous les enroulements statoriques.

3. Dispositif selon la revendication 2, dans lequel on utilise comme signaux de position de rotor des signaux qui sont prélevés sur les différents enroulements de moteur (126, 128, 132, 134) selon le principe sensorless ou sans capteur.

4. Dispositif selon la revendication 3, dans lequel les différents enroulements (126, 128, 132, 134) des moteurs (112, 114) sont découplés les uns des autres au moins partiellement.

5. Dispositif selon la revendication 4, dans lequel une diode (220, 222, 224, 226) est prévue dans chacune des lignes d'amenée vers les différents enroulements (126, 128, 132, 134) des moteurs (112, 114).

6. Dispositif selon la revendication 4, dans lequel les différents enroulements (126, 128, 132, 134) des moteurs (112, 114) sont découplés par le fait que le courant est amené à chaque enroulement par l'intermédiaire d'un commutateur à semi-conducteurs (250, 252, 254, 256) séparé.

7. Dispositif selon l'une des revendications 2 à 6 avec au moins un moteur à commutation électronique (112, 114) qui présente un stator à deux phases (126, 128) et un rotor à aimant permanent (124), lequel dernier induit lors de sa rotation des tensions dans ces phases (126, 128) du stator, la tension induite étant différentiée dans une phase sans courant du moteur et un signal de position de rotor étant généré avec la tension différentiée.

8. Dispositif selon la revendication 7, dans lequel le signal généré par la différentiation est filtré avant son évaluation.
